# EUROPEAN PATENT APPLICATION

(11) **EP 3 564 201 A1**
(43) Date of publication of application: **06.11.2019**
(21) Application number: 17887063.0
(22) Date of filing: 19.12.2017
(51) Int. Cl.: C04B 35/101, C21B 7/06, F27D 1/00

(54) **BRICK FOR BLAST FURNACE HEARTHS AND BLAST FURNACE HEARTH USING SAME, AND METHOD FOR PRODUCING BRICK FOR BLAST FURNACE HEARTHS**

(30) Priority: 28.12.2016 JP 2016254688
(71) Applicant: Krosakiharima Corporation, Kitakyushu-shi, Fukuoka 806-8586 (JP)
(72) Inventor: MISHIMA, Masaaki, Kitakyushu-shi Fukuoka 806-8586 (JP)
(74) Representative: Vossius & Partner Patentanwälte Rechtsanwälte mbB
(86) International application number: PCT/JP2017/045512
(87) International publication number: WO 2018/123726

(57) **Abstract**

Provided is a blast furnace hearth brick which is excellent in terms of hydration resistance and improved in terms of molten pig iron resistance and slag resistance. Specifically, according to one aspect of the present invention, there is provided a blast furnace hearth brick which contains: corundum and aluminum oxynitride, respectively, in an amount of 47 to 92 mass% and in an amount of 7 to 50mass%, and in a total amount of 84 mass% or more; a carbonaceous raw material in an amount of 10 mass% or less (excluding 0); aluminum nitride in an amount of 3 mass% or less (including 0); and AlN polytypoid sialon, β'-sialon and silicon nitride in a total amount of 3 mass% or less (including 0), wherein the aluminum oxynitride is contained in a matrix portion of the blast furnace hearth brick, in an amount of 7 mass% or more.

## Description

### TECHNICAL FIELD

The present invention relates to a blast furnace hearth brick for use in a blast furnace hearth (as used in this specification, the term "blast furnace hearth" means to a hearth of a blast furnace which comprises a sidewall below a tuyere, and a furnace bottom), a blast furnace hearth using the blast furnace hearth brick, and a production method for the blast furnace hearth brick.

### BACKGROUND ART

Generally, a blast furnace hearth is formed primarily using a carbonaceous brick comprising graphite as an aggregate, or an aluminaceous brick comprising alumina as an aggregate. In this situation, one factor dominating furnace lifetime is wear damage or loss of such a blast furnace hearth brick.

For example, while a mainstream lining material for a blast furnace hearth is a carbonaceous brick (block), such a brick containing a carbon component in a relatively large amount is poor in terms of molten pig iron resistance, because carbon contained in the brick is liable to dissolve into molten pig iron during use in the blast furnace heath. For this reason, the molten pig iron resistance is ensured by enhancing cooling of the lining material from outside the furnace to form a viscous molten pig iron layer on a working surface of the brick to thereby prevent dissolution of carbon from the carbonaceous brick into molten pig iron. However, such cooling from outside the furnace will cause large energy loss.

Therefore, in recent years, an aluminaceous brick primarily comprised of alumina which is less likely to dissolve into molten pig iron has also been increasingly used. In particular, a sialon-bonded alumina brick containing β'-sialon represented by the following chemical formula: Si_{6-Z} Al_{Z}O_{Z}N_{8-Z}, in a matrix portion thereof, contains almost no carbon, so that it is excellent in terms of the molten pig iron resistance, and excellent in terms of corrosion resistance against slag produced in a blast furnace (slag resistance).

For example, in the following Patent Document 1, there is disclosed a sialon-bonded alumina brick containing, in a matrix portion (bonding matrix) thereof, β'-sialon in an amount of 12 to 45 mass%, wherein the β'-sialon has a Z value (as used in this specification, the term "Z value" means a value of Z in the chemical formula of β'-sialon: Si_{6-Z}Al_{Z}O_{Z}N_{8-Z}) of 0.5 to 4. However, the sialon-bonded alumina brick disclosed in the Patent Document 1 is insufficient in terms of the molten pig iron resistance, because Si in β'-sialon contained in the matrix portion of the brick will dissolve into molten pig iron little by little, thereby leading to an increase in loss of the brick.

For this reason, as a brick containing no Si in a matrix portion thereof, an aluminum compound-bonded brick having a bonding microstructure comprised of an aluminum compound is also developed.

For example, in the following Patent Document 2, there is disclosed an aluminum compound-bonded brick for a blast furnace hearth, wherein a microstructure of the brick consists of a crystalline phase and an amorphous phase, wherein the crystalline phase comprises corundum which is contained in an amount of 80 to 98 mass%, and an aluminum nitride crystal and/or an aluminum oxycarbide crystal which are contained in an amount of 1 to 18 mass%, and the amorphous phase is contained in an amount of 0.5 to 10 mass%, and wherein an Si content is 3 mass% or less. Further, it is disclosed that a refractory product having a bonding microstructure comprised of aluminum nitride or aluminum oxycarbide (mainly, Al₂OC or Al₄O₄C) is excellent in terms of the molten pig iron resistance.

However, the blast furnace hearth aluminum compound-bonded brick disclosed in the Patent Document 2 has a problem that it is poor in terms of hydration resistance, specifically, the aluminum nitride or aluminum oxycarbide contained therein is more likely to be hydrated by water during cutting work of the brick, or water in mortar during construction of a lining, or water in the air during storage of the brick. Moreover, this brick is still insufficient in terms of the slag resistance.

Further, the following Patent Document 3 discloses, in Example 3, an aluminum compound-bonded brick which contains corundum, aluminum nitride, and AlON as aluminum oxynitride. The Patent Document 3 also disclose a production method for this brick, which comprises setting a compact of a mixture of an aluminum powder and a refractory raw material powder in a hermetically sealable container, and burning the compact in a state which silicon nitride particles are filled in the container. In this process, oxygen originating from the air coexists in a burning atmosphere, so that aluminum oxynitride is formed in addition to aluminum nitride. That is, it is disclosed that, in addition to aluminum nitride, aluminum oxynitride is simultaneously formed and precipitated according to partial pressures of nitrogen and oxygen in the burning atmosphere through a gas phase reaction.

In the aluminum compound-bonded brick obtained by the production method in the Patent Document 3, aluminum oxynitride is formed as a result of oxidation of aluminum nitride, i.e., as a by-product of aluminum nitride, so that it is difficult to form aluminum oxynitride on a priority basis, and further the amount of formation of the aluminum oxynitride is small. Specifically, in the brick in Example 3, with regard to an X-ray diffraction peak intensity, AlN is 800, and AlON is 200, i.e., the content rate of AlON is low. Thus, although the brick in Example 3 is improved in terms of the molten pig iron resistance and the slag resistance, it is desired to further improve this content rate. Further, aluminum nitride is more likely to be hydrated, and, a high content rate of aluminum nitride is likely to lead to the aforementioned problem regarding hydration resistance.

Recently, a blast furnace is used for 15 to 20 years after being newly installed, and a blast furnace hearth cannot be repaired, so that it is often the case that a wear damage of the blast furnace hearth determines lifetime of the blast furnace. Therefore, it is desired to constantly improve the slag resistance and the molten pig iron resistance.

### CITATION LIST

### [Parent Document]

Patent Document 1: JP H06-502140A (JP 3212600B)
Patent Document 2: WO 2009/072652A
Patent Document 3: JP 4245122B

### SUMMARY OF INVENTION

### [Technical Problem]

A problem to be solved by the present invention is to provide a blast furnace hearth brick which is excellent in terms of hydration resistance and improved in terms of molten pig iron resistance and slag resistance, and further to improve lifetime of a blast furnace hearth.

### [Solution to Technical Problem]

The present inventor assumed that, in blast furnace hearth brick having a bonding microstructure comprised of an aluminum compound, the microstructure of a matrix portion exerts a great influence on the molten pig iron resistance and the slag resistance, and conducted various experimental tests with a focus on improvement of this matrix portion. As a result, the present inventor found that, as the microstructure of the matrix portion, aluminum oxynitride is considerably superior to aluminum nitride or aluminum oxycarbide, in terms of the slag resistance and the molten pig iron resistance, and in terms of the hydration resistance.

Specifically, the summary of the present invention is as follows.
(1) A blast furnace hearth brick containing: corundum and aluminum oxynitride, respectively, in an amount of 47 to 92 mass% and in an amount of 7 to 50mass%, and in a total amount of 84 mass% or more; a carbonaceous raw material in an amount of 10 mass% or less (excluding 0); aluminum nitride in an amount of 3 mass% or less (including 0); and AlN polytypoid sialon, β'-sialon and silicon nitride in a total amount of 3 mass% or less (including 0), wherein the aluminum oxynitride is contained in a matrix portion of the blast furnace hearth brick, in an amount of 7 mass% or more.
(2) A blast furnace hearth brick containing: corundum and aluminum oxynitride, respectively, in an amount of 47 to 92 mass% and in an amount of 7 to 50mass%, and in a total amount of 94 mass% or more; aluminum nitride in an amount of 3 mass% or less (including 0); and AlN polytypoid sialon, β'-sialon and silicon nitride in a total amount of 3 mass% or less (including 0), without containing any carbonaceous raw material, wherein the aluminum oxynitride is contained in a matrix portion of the blast furnace hearth brick, in an amount of 7 mass% or more.
(3) A blast furnace hearth which is lined with the blast furnace hearth brick as set forth in (1) or (2).
(4) A method of producing a blast furnace hearth brick, which comprises: preparing a refractory raw material composition which contains: in a total amount of 6 to 38 mass%, a mixture of (A) calcined alumina having an average particle size of 10 µm or less and/or an alumina precursor having an average particle size of 10 µm or less, and (B) metal aluminum having a particle size of 0.1 mm or less, which are mixed at a mass ratio (A/B) of 0.4 to 7.6; and an aluminaceous raw material excluding calcined alumina, in an amount of 62 to 94 mass%; after adding a binder to the refractory raw material composition, subjecting the resulting mixture to kneading and shaping to obtain a shaped body; and burning the shaped body in a nitrogen atmosphere at a temperature of 1300 to 1800°C.
(5) A method of producing a blast furnace hearth brick, which comprises: preparing a refractory raw material composition which contains: an aluminaceous raw material excluding calcined alumina, in an amount of 50 to 87 mass%; calcined alumina having an average particle size of 10 µm or less, in an amount of 5 to 30 mass%; aluminum oxynitride having a particle size of 0.1 mm or less, in an amount of 7 to 50 mass%; after adding a binder to the refractory raw material composition, subjecting the resulting mixture to kneading and shaping to obtain a shaped body; and burning the shaped body in a nitrogen atmosphere at a temperature of 1300 to 1600°C.
(6) The method as set forth in (4) or (5), wherein the refractory raw material composition contains flake graphite having a particle size of 0.2 mm or less, in an amount of 1 to 10 mass%.

The details of the present invention will be described below.

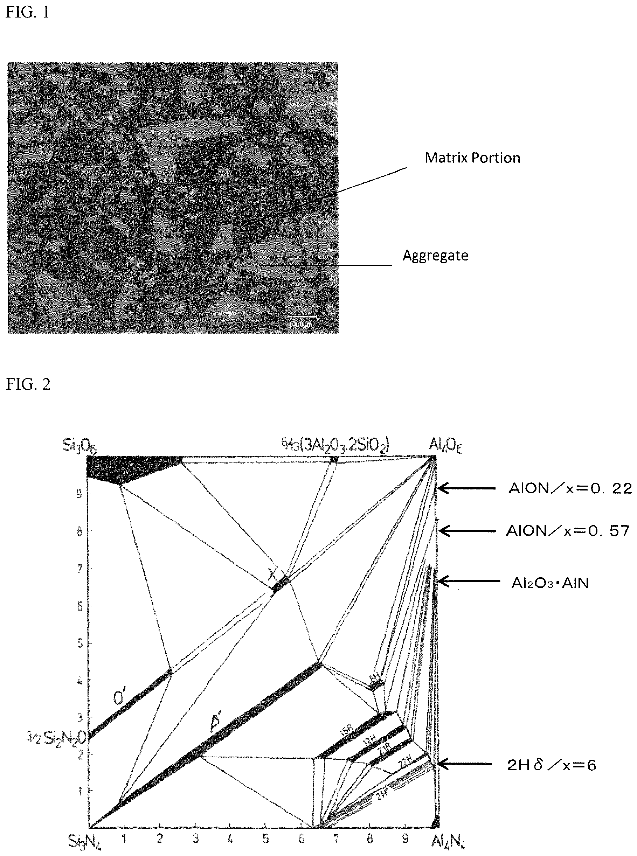

The microstructure of the blast furnace hearth brick of the present invention (hereinafter referred to simply as "the brick of the present invention") consists of an aggregate portion composed of aggregates, and a matrix portion which is a bonding microstructure for bonding the aggregates together. As shown in FIG. 1, each of the aggregates is a particle having a particle size of greater than 0.1 mm, and the matrix portion is a continuous portion of the microstructure in which particles having a particle size of 0.1 mm or less exist between adjacent ones of the aggregates.

In the brick of the present invention, the matrix portion mainly comprises only aluminum oxynitride, or aluminum oxynitride and corundum, and the aggregate portion mainly comprises only corundum, or corundum and aluminum oxynitride. Here, the term "aluminum oxynitride" means a composition falling within a range of AlON/x = 0.22 to 2Hδ/x = 6, in a Si₃N₄-AlN-Al₂O₃-SiO₂ system composition diagram of FIG. 2. That is, the the present invention, such a composition is defined as "aluminum oxynitride". Here, AlON/x means Al_{(8+X)/3}O_{(4-X)}N_{X}, and 2Hδ/x means Si_{(6-X)}Al_{(16+X)}O_{X}N_{(24-X)}. Further, in the present invention, the term "AlON solid solution" means means a composition falling within a range of AlON/x = 0.22 to AlON/x = 0.57, in FIG. 2.

Aluminum oxynitride has higher slag resistance than that of corundum, so that when it exists in the matrix portion into which slag more easily penetrates as compared to the aggregate portion, the slag resistance is enhanced. Specifically, in the brick of the present invention, aluminum oxynitride is contained in the matrix portion, in an amount of 7 mass% or more. If the content of aluminum oxynitride is less than 7 mass%, the slag resistance becomes insufficient. Here, aluminum oxynitride can be included in the aggregate portion without any negative influence, and may be contained in the aggregate portion, in an amount of up to about 15 mass%.

Further, in the brick of the present invention, the total content of aluminum oxynitride is from 7 to 50 mass%. If the total content is less than 7 mass%, the slag resistance becomes insufficient. On the other hand, the total content is greater than 50 mass%, the molten pig iron resistance becomes insufficient.

Although corundum is excellent in the molten pig iron resistance and thereby mainly included in the aggregate portion, a part thereof may be included in the matrix portion without any problem. If the content of corundum is less than 47 mass%, the molten pig iron resistance becomes insufficient. On the other hand, the content of corundum is greater than 92 mass%, the content of aluminum oxynitride becomes insufficient and thus the slag resistance becomes insufficient.

Further, in the brick of the present invention, the total amount of corundum and aluminum oxynitride is 84 mass% or more, when the brick contains a carbonaceous raw material such as flake graphite, calcined anthracite, coke or pitch. However, in a case where the brick contains no carbonaceous raw material so as to further enhance the molten pig iron resistance, the total amount may be set to 96 mass% or more. If the total amount of corundum and aluminum oxynitride is less than 84 mass%, it becomes impossible to obtain practically-required corrosion resistance (slag resistance). It should be noted here that examples of a component other than corundum and aluminum oxynitride include a non-crystalline phase comprising Al₂O₃ as a primary component, which cannot be quantitatively measured by X-ray measurement. Further, as a component for assisting the slag resistance or a by-product during production, aluminum nitride and/or AlN polytypoid sialon may be contained in a small amount.

In the brick of the present invention, it is better not to include aluminum nitride, because the aluminum nitride causes deterioration in the hydration resistance although it is useful in enhancing the slag resistance. However, as long as the content of aluminum nitride is 3 mass% or less, the negative influence on the hydration resistance can be minimized.

In the brick of the present invention, it is better not to include AlN polytypoid sialon, β'-sialon and silicon nitride, because each of them easily dissolves in molten pig iron. However, as long as the total amount of them is 3 mass% or less, the inclusion is allowable. Here, the term "AlN polytypoid sialon" means Si-Al-O-N solid solution, and, according to the Ramsdell notation, it denotes six types of AlN polytypoid sialons consisting of 2H δ-type, 27R-type, 21 R-type, 12H-type, 15R-type and 8H-type AlN polytypoid sialons, as enumerated in ascending order of Si content rate.

In the brick of the present invention, when priority is given to the molten pig iron resistance, e.g., in a case where the brick is lined on a region of a blast furnace hearth which is free of contact with slag, it is better not to include a carbonaceous raw material such as flake graphite, calcined anthracite, coke or pitch, because the carbonaceous raw material easily dissolves in molten pig iron. On the other hand, when priority is given to the slag resistance, e.g., in a case where the brick is lined on a region of a blast furnace hearth which comes into contact with slag, the carbonaceous raw material such as flake graphite, calcined anthracite, coke or pitch may be contained in an amount of 10 mass% or less for the purpose of enhancing the slag resistance. In particular, flake graphite having a particle size of 0.2 mm or less may be contained in an amount of 1 to 10 mass%. In this case, the slag resistance can be enhanced without deterioration in the molten pig iron resistance. Here, the "region which is free of contact with slag" specifically means a region below a tap hole in a blast furnace hearth, and the "region which comes into contact with slag" specifically means an upper region including the tap hole in the blast furnace hearth.

By lining the above brick of the present invention on a blast furnace hearth, it becomes possible to significantly extend durability of a blast furnace.

Next, a production method for the brick of the present invention will be described. The production method for the brick of the present invention includes two production methods. Specifically, there are a first production method in which alumina reacts with aluminum nitride resulting from nitriding of metal aluminum, to form aluminum oxynitride, and a second production method using aluminum oxynitride as a raw material from the start.

In the production method disclosed in the Patent Document 3, metal aluminum is subjected to heat treatment in a mixed atmosphere containing nitrogen and oxygen, to obtain aluminum oxynitride through a gas phase reaction. Therefore, the resulting aluminum oxynitride has a crystalline form such as a feather-like form, a needle-like form, or a whisker-like form, i.e., it is difficult to obtain aluminum oxynitride having a dense microstructure. On the other hand, in the first production method of the present invention, a mixture of active calcined alumina or alumina precursor, and metal aluminum, is subjected to heat treatment in a nitrogen atmosphere, so that it is possible to obtain aluminum oxynitride having a dense microstructure.

More specifically, in the first production method of the present invention, as the particle size of calcined alumina used in the refractory raw material composition becomes smaller, the calcined alumina has a higher activity in reacting with aluminum nitride resulting from nitriding of metal aluminum, to form aluminum oxynitride, and therefore the rate of formation of aluminum oxynitride becomes higher. For this reason, in the first production method of the present invention, the average particle size of calcined alumina is set to 10 µm or less. If the average particle size of the calcined alumina is greater than 10 µm, reactivity of the calcined alumina with respect to aluminum nitride is lowered, so that the rate of formation of aluminum oxynitride is lowered and conversely the content rate of aluminum nitride is increased, resulting in insufficient hydration resistance. As well as the calcined alumina having an average particle size of 10 µm or less, an alumina precursor having an average particle size of 10 µm or less may be used independently or in combination with the calcined alumina having an average particle size of 10 µm or less. Here, the term "average particle size" means, in a graph created by plotting a relationship between a particle size and a mass rate measured by a laser diffraction/scattering particle size distribution analyzer, a value of the particle size read when a cumulative value of the mass rate reaches 50%.

Further, in order to increase activity in the same manner as that mentioned above, the particle size of metal aluminum used in the refractory raw material composition is set to 0.1 mm or less. Here, the term "particle size" means a sieve mesh. Specifically, a particle size of 0.1 mm or less means the size of a particle capable of passing through a sieve mesh of 0.1 mm.

In the first production method, from the Si₃N₄-AlN-Al₂O₃-SiO₂ system composition diagram of FIG. 2, the present inventor considered that the rate of formation of aluminum oxynitride is increased when Al₄O₆/Al₄N₄ is in the range of 18/82 to 80/20. Then, these ratios were converted with respect to raw materials used in the refractory raw material composition, i.e., (A) the calcined alumina having an average particle size of 10 µm or less and/or the alumina precursor having an average particle size of 10 µm or less and (B) the metal aluminum having a particle size of 0.1 mm or less, and the mass ratio A/B was set in the range of 0.4 to 7.6. If this mass ratio A/B is less than 0.4, the content rate of the metal aluminum becomes excessive and thus free aluminum nitride in the brick is excessively increased, leading to a problem regarding the hydration resistance. Further, an excessively large addition amount of the metal aluminum leads to difficulty in obtaining a sufficient density during shaping. On the other hand, if the mass ratio A/B is greater than 7.6, the content rate of aluminum oxynitride is reduced, resulting in insufficient slag resistance.

Further, in the first production method, if the total amount (amount of a mixture) of (A) the calcined alumina having an average particle size of 10 µm or less and/or the alumina precursor having an average particle size of 10 µm or less, and (B) the metal aluminum having a particle size of 0.1 mm or less, in the refractory raw material composition, is less than 6 mass%, aluminum oxynitride in the matrix portion becomes insufficient and thus slag resistance becomes insufficient. On the other hand, if the total amount is greater than 38 mass%, the rate of the matrix portion becomes excessively large, resulting in insufficient molten pig iron resistance.

An aluminaceous raw material excluding calcined alumina is used to form the aggregate portion and/or the matrix portion of the brick. Specifically, in the first production method, the aluminaceous raw material excluding calcined alumina is contained in the refractory raw material composition, in an amount of 62 to 94 mass%.

Next, the second production method will be described.

In the second production method, by using calcined alumina having an average particle size of 10 µm or less, and aluminum oxynitride having a particle size of 0.1 mm or less, the matrix portion forms a sintered bond (bonding microstructure) including the aluminum oxynitride, so that the matrix portion is formed as a microstructure which is excellent in terms of the hydration resistance and improved in terms of the molten pig iron resistance and the slag resistance. Further, by using the aluminum oxynitride as a raw material, it becomes possible to produce a brick in which the aluminum oxynitride is uniformly contained from a surface layer to a central area thereof even in a large-size brick having a large thickness of 200 mm to 300 mm.

In the second production method, the particle size of the aluminum oxynitride used in the refractory raw material composition is set to 0.1 mm or less to enable the aluminum oxynitride to exist in the matrix portion.

Further, in the second production method, the aluminum oxynitride used in the refractory raw material composition remains unchanged during burning, and therefore the rate of the aluminum oxynitride in the brick after burning becomes approximately equal to the rate of the aluminum oxynitride in the refractory raw material composition, so that it is possible to use the aluminum oxynitride only by an amount required for an intended brick. More specifically, the content rate of the aluminum oxynitride in the refractory raw material composition is set in the range of 7 to 50 mass%. If the content rate is less than 7 mass%, the slag resistance of the resulting brick becomes insufficient. On the other hand, if the content rate is greater than 50 mass%, the molten pig iron resistance becomes insufficient.

In the second production method, the calcined alumina having an average particle size of 10 µm or less is contained in the refractory raw material composition in an amount of 5 to 30 mass% to form the matrix portion. If the content rate is less than 5 mass%, a bonding microstructure of the matrix portion is not fully developed, resulting in poor strength of the brick. On the other hand, the content rate is greater than 30 mass%, the slag resistance becomes insufficient.

An aluminaceous raw material excluding calcined alumina is used to form the aggregate portion and/or the matrix portion of the brick. Specifically, the aluminaceous raw material excluding calcined alumina is contained in the refractory raw material composition, in an amount of 50 to 87 mass%.

Further, in the first and second production methods, a carbonaceous raw material such as flake graphite, calcined anthracite, coke or pitch may be contained in an amount of 10 mass% or less for the purpose of enhancing the slag resistance. In particular, flake graphite having a particle size of 0.2 mm or less may be contained in an amount of 1 to 10 mass%. In this case, the slag resistance can be enhanced without deterioration in the molten pig iron resistance.

Further, assume that a metal silicon powder is included in the refractory raw material composition. In this case, in the first production method, AlN polytypoid sialon is more likely to be formed in priority to aluminum oxynitride and aluminum nitride, so that the molten pig iron resistance is likely to become insufficient. Further, in the second production method, silicon nitride is formed, so that the molten pig iron resistance is also likely to become insufficient. Therefore, in the production method of the present invention, it is preferable that the refractory raw material composition does not contain a metal silicon. However, as long as the content rate of the metal silicon powder is 2 mass% or less, the inclusion is allowable.

Further, in the first and second production methods, a small amount of SiO₂ is contained in the aluminaceous raw material excluding calcined alumina or the carbonaceous raw material used in the refractory raw material composition, and a Si component originating from the SiO₂ contained in the raw material dissolves in molten pig iron, causing deterioration in the molten pig iron resistance. Therefore, although it is best that no Si component is contained in the refractory raw material composition, the content rate may be reduced to 3 mass% or less, preferably 1 mass% or less. As long as the content rate falls within this range, SiO₂ may be used, because a negative influence on the slag resistance and the molten pig iron resistance is small.

Further, in the first and second production methods, in the case where the content rate of the Si component in the refractory raw material composition is 3 mass% or less, preferably 1 mass% or less, a raw material other than the aforementioned raw materials, such as mullite, silicon nitride, silicon carbide, titanium oxide, or chromium oxide, may be contained in the refractory raw material composition as an aggregate having a particle size of greater than 0.1 mm, in an amount of 7 mass% or less, because a negative influence on the slag resistance and the molten pig iron resistance is small.

The blast furnace hearth brick of the present invention is obtained by: after adding a binder to the above refractory raw material composition, subjecting the resulting mixture to kneading and shaping to obtain a shaped body; and burning the shaped body in a nitrogen atmosphere, at a temperature of 1300 to 1800°C in the first production method or at a temperature of 1300 to 1600°C in the second production method. Here, if the burning temperature is excessively low, aluminum nitride included in a brick after burning is likely to excessively increase. In this case, the burning temperature can be raised to promote a reaction between aluminum nitride and alumina so as to reduce or eliminate unreacted aluminum nitride.

In the first production method, if the burning temperature is lower than 1300°C, the formation of aluminum oxynitride becomes insufficient, resulting in failing to obtain the effect of improving the molten pig iron resistance and the slag resistance, and in poor hydration resistance. The upper limit of the burning temperature is 1800°C. If the burning temperature exceeds this upper limit, grain growth of aluminum oxynitride is tremendously progressed, leading to an undesirable result as a blast furnace hearth brick, such as deterioration in dense property of the brick, or lowering of mechanical strength.

In the second production method, if the burning temperature is lower than 1300°C, sintering of the calcined alumina becomes insufficient, resulting in failing to obtain the effect of improving the molten pig iron resistance and the slag resistance. The upper limit of the burning temperature is 1600°C. If the burning temperature exceeds this upper limit, sintering of the calcined alumina is excessively progressed, and grain growth is promoted, resulting in impairment of the dense property of the brick. Moreover, aluminum oxynitride also undergoes grain growth and partial decomposition, resulting in impairment of high corrosion resistance.

### [Effect of Invention]

The brick of the present invention is excellent in terms of the hydration resistance, the molten pig iron resistance and the slag resistance, so that it is possible to improve lifetime of a blast furnace hearth.

### BRIEF DESCRIPTION OF DRAWINGS

FIG. 1 is a photograph showing one example of a microstructure of a blast furnace hearth brick according to the present invention.
FIG. 2 is a Si₃N₄-AlN-Al₂O₃-SiO₂ system composition diagram.

### DESCRIPTION OF EMBODIMENTS

In the present invention, calcined alumina having an average particle size of 10 µm or less, which is used in a refractory raw material composition, is alumina having a large specific surface area and a high reactivity, sometimes called "sinterable alumina". As the calcined alumina, any commercially available product may be used. Further, an alumina precursor having an average particle size of 10 µm or less is an aluminum compound which is capable of forming aluminum oxide when being heated in a nitrogen atmosphere. Examples of the alumina precursor include pseudo-boehmite type aluminum hydroxide, γ alumina, and aluminum alkoxide.

Further, as an aluminaceous raw material excluding calcined alumina, it is possible to use, e.g., one or more selected from the group consisting of fused alumina, sintered alumina, bauxite, and alumina shale. However, considering that the molten pig iron resistance is more improved as the content of SiO₂ is smaller, the aluminaceous raw material excluding calcined alumina to be used contains SiO₂ preferably in an amount of 1 mass% or less, more preferably in an amount of 0.5 mass% or less. Further, from a viewpoint of the molten pig iron resistance, the purity of Al₂O₃ in the aluminaceous raw material excluding calcined alumina to be used is preferably 90 mass% or more, more preferably 98 mass% or more.

In the present invention, as metal aluminum having a particle size of 0.1 mm or less to be used in the refractory raw material composition, any powdered aluminum commonly used in refractory products may be used without any problem. Such powdered aluminum is commercially supplied in two forms: an atomized powder and a flake powder, depending on a production method. In the present invention, both the powders may be used.

In the present invention, as a carbonaceous raw material for further improving the slag resistance, it is possible to use flake graphite, calcined anthracite, coke, and pitch, independently or in the form of a combination of two or more of them. Here, the carbonaceous raw material does not include an organic binder such as a phenol resin or tar to be used as a binder.

As the flake graphite, it is possible to use flake graphite commonly used as a raw material for refractory products, wherein the flake graphite has a particle size of 0.2 mm or less. As previously mentioned, the term "particle size" means a sieve mesh. Specifically, a particle size of 0.2 mm or less means the size of a particle capable of passing through a sieve mesh of 0.2 mm. Flake graphite subjected to pulverization may also be used.

In the present invention, as aluminum oxynitride having a particle size of 0.1 mm or less to be used in the refractory raw material composition, it is possible to use aluminum oxynitride having a composition falling within a range of AlON/x = 0.22 to 2Hδ/x = 6, in the Si₃N₄-AlN-Al₂O₃-SiO₂ system composition diagram (FIG. 2), specifically aluminum oxynitride having AlON solid solution or a crystalline phase such as 3Al₂O₃ · AlN or Al₂O₃ · AlN, or a mixture thereof, without any problem. It is more preferable to use aluminum oxynitride in which the rate of the crystalline phase is 95 mass% or more, and the content of a Si component is 1 mass% or less.

As the aluminum oxynitride, it is possible to use aluminum oxynitride which is produced by a heretofore-known production method, and comprises, e.g., an AlON solid solution composition and an Al₂O₃ · AlN or 2Al₂O₃ · AlN phase synthesized through a nitriding reaction between the metal aluminum and the calcined alumina or alumina precursor.

When the blast furnace hearth brick according to the present invention is used in (as a lining of) a blast furnace hearth, it is possible to use the blast furnace hearth brick in combination with, or for full replacement of conventional carbon bricks. Specifically, the blast furnace hearth brick can be used for a sidewall below a tuyere, and a furnace bottom of a blast furnace.

### EXAMPLES

A brick in each Example was obtained by: adding resol-type phenolic resin as a binder to a corresponding one of the refractory raw material compositions shown in Tables 1 and 2; kneading the resulting mixture; forming the kneaded mixture into a shaped body having a JIS standard brick shape by oil press; subjecting the shaped body to heating treatment at 250°C; and then burning the resulting shaped body in a nitrogen gas flow at 1400°C.

With regard to components used in each of the refractory raw material compositions, fused alumina was of a type in which the content of Al₂O₃ is 98 mass% or more, and the content of SiO₂ is 0.5 mass% or less, and calcined alumina was of a type in which the content of Al₂O₃ is 98 mass% or more, and the content of SiO₂ is 0.5 mass% or less. Further, flake graphite was natural flake graphite in which the content of C is 95 mass% or more, and metal aluminum was a flake type aluminum power having a particle size of 74 µm or less. AlN was commercially-available AlN having a purity of 98% or more, and AlN polytypoid sialon was 27R type AlN polytypoid sialon preliminarily synthesized through a reaction sintering process. Aluminum oxynitride was of a type comprising an AlON solid solution composition and an Al₂O₃ · AlN phase synthesized through a nitriding reaction between the metal aluminum and the calcined alumina. The purity of each mineral composition was 95%, and the content of a Si component was less than 1 mass%.

An obtained brick was subjected to analysis of mineral composition, measurement of apparent porosity and compressive strength, and evaluation of slag resistance, molten pig iron resistance and hydration resistance. The apparent porosity was measured in accordance with JIS-R2205, and the compressive strength was measured in accordance with JIS R2206. The quantitative determination of mineral species was performed using an X-ray diffraction method and a method of chemical analysis. The total amount of components in the mineral composition is not 100 mass%, wherein the reminder is a non-crystalline phase comprising Al₂O₃ as a primary component, which cannot be quantitatively measured by X-ray measurement.

With regard to the slag resistance and the molten pig iron resistance, a test brick formed in a square bar shape having a size of 20 × 20 × 180 mm was subjected to corrosion in blast furnace slag and pig iron melted by induction heating and adjusted at 1600°C, for 5 hours, and a corroded thickness was measured, and the measured value was converted to a corrosion loss index with respect to 100 which corresponds to a value of the corroded thickness in Comparative Example 5, to evaluate each of the slag resistance and the molten pig iron resistance. Specifically, a corroded thickness of a part of the test brick immersed in the molten pig iron, and a corroded thickness of a maximally-worn part of the test brick at a boundary between the slag and the molten pig iron were measured, respectively, for the molten pig iron resistance and the slag resistance, and each of the measured values was converted to an index with respect to 100 which corresponds to a value of the corroded thickness in Comparative Example 5, to evaluate each of the molten pig iron resistance and the slag resistance. A smaller value of the corrosion loss index means that each of the molten pig iron resistance and the slag resistance is better.

With regard to hydration resistance, a test piece having a size of 10 × 10 × 10 was cut from a JIS standard test brick, and immersed in 200 mL of water at room temperature to measure pH. Then, from pH measured after 24 hours, an amount of generation of ammonia gas was calculated. The calculated value was indicated by an index with respect to 100 which corresponds to a value of the ammonia gas amount in Comparative Example 4. A smaller value of this index means that the hydration resistance is better.

**TABLE 1**

| | | | Inventive Example 1 | Inventive Example 2 | Inventive Example 3 | Inventive Example 4 | Inventive Example 5 | Inventive Example 6 | Inventive Example 7 | Comparative Example 1 | Comparative Example 2 | Inventive Example 8 | Comparative Example 3 |
|---|---|---|---|---|---|---|---|---|---|---|---|---|---|
| Refractory Raw Material Composition (mass%) | | | | | | | | | | | | | |
| | Fused alumina | Particle size: greater than 1 mm to 3 mm | 50 | 50 | 50 | 50 | 50 | 59 | 48 | 67 | 43 | 54 | 55 |
| | Fused alumina | Particle size: 1 mm or less | 37 | 38 | 39 | 36 | 36 | 35 | 14 | 29 | 12 | 28 | 26 |
| | Calcined alumina | Average particle size: 5 *µ*m | 11.5 | 9.5 | 3 | 11.5 | 9 | 4 | 23 | 3 | 27 | 9 | 9 |
| | Calcined alumina | Average particle size: 20 *µ*m | | | | | | | | | | | |
| | *γ* alumina | Average particle size: 5 *µ* m | | | | | | | | | | | |
| | Aluminum hydroxide | Average particle size: 5 *µ*m | | | | | | | | | | | |
| | Metal aluminum | Particle size: 0.074 mm or less | 1.5 | 2.5 | 8 | 2.5 | 5 | 2 | 15 | 1 | 18 | 6 | 6 |
| | Flake graphite | Particle size: 0.2 mm or less | | | | | | | | | | | |
| | AlN polytypoid sialon | Particle size: 0.1 mm or less | | | | | | | | | | 3 | 4 |
| | Aluminaceous raw material excluding calcined alumina | | 87 | 88 | 89 | 86 | 86 | 94 | 62 | 96 | 55 | 82 | 81 |
| | Amount of mixture (A + B) (mass%)* | | 13 | 12 | 11 | 14 | 14 | 6 | 38 | 4 | 45 | 15 | 15 |
| | Mass ratio A/B * | | 7.6 | 3.8 | 0.4 | 4.6 | 1.8 | 2 | 1.5 | 3 | 1.5 | 1.5 | 1.5 |
| Mineral Composition of Brick (mass%) | | a) AlON solid solution | 15 | | | 8 | | 4 | | 2 | | | |
| | | b) Al₂O₃ · AlN | | 15 | | 7 | 8 | 3 | 37 | 2 | 45 | 15 | 15 |
| | | c) 2H *δ* / x = 6 | | | 15 | | 7 | | 13 | | 15 | | |
| | | Total amount of aluminum oxynitride [a)+b)+c)] | 15 | 15 | 15 | 15 | 15 | 7 | 50 | 4 | 60 | 15 | 15 |
| | | Aluminum oxynitride in matrix portion | 15 | 15 | 15 | 15 | 15 | 7 | 50 | 4 | 60 | 15 | 15 |
| | | AlN polytypoid sialon | | | | | | | | | | 3 | 4 |
| | | Aluminum nitride | | | | | | | | | | | |
| | | Corundum | 82 | 82 | 82 | 82 | 82 | 90 | 47 | 93 | 37 | 79 | 78 |
| | | Flake graphite | | | | | | | | | | | |
| Burning Atmosphere | | | Nitrogen | Nitrogen | Nitrogen | Nitrogen | Nitrogen | Nitrogen | Nitrogen | Nitrogen | Nitrogen | Nitrogen | Nitrogen |
| Physical Properties of Brick | | Apparent porosity (%) | 13 | 13 | 13 | 13 | 13 | 13 | 13 | 15 | 14 | 13 | 13 |
| | | Compressive strength (Mpa) | 200 | 200 | 200 | 200 | 200 | 200 | 200 | 150 | 180 | 180 | 180 |
| Corrosion Resistance (Corrosion Loss Index) | | Slag resistance | 75 | 70 | 60 | 70 | 80 | 90 | 60 | 120 | 60 | 100 | 90 |
| | | Molten pig iron resistance | 40 | 40 | 40 | 40 | 70 | 30 | 90 | 50 | 115 | 80 | 100 |
| Hydration Resistance (Hydration Index) | | | 70 | 70 | 80 | 80 | 50 | 50 | 80 | 40 | 90 | 80 | 110 |

| | | | | | | | | | | | | | |
|---|---|---|---|---|---|---|---|---|---|---|---|---|---|
| * A: Calcined alumina having an average particle size of 10 µm or less and/or an alumina precursor having an average particle size of 10 µm or less | | | | | | | | | | | | | |

**TABLE 2**

| | | | Inventive Example 9 | Inventive Example 10 | Comparative Example 4 | Inventive Example 11 | Comparative Example 5 | Comparative Example 6 | Inventive Example 12 | Inventive Example 13 | Inventive Example 14 | Inventive Example 15 | Comparative Example 7 | Comparative Example 8 | Comparative Example 9 |
|---|---|---|---|---|---|---|---|---|---|---|---|---|---|---|---|
| Refractory Raw Material Composition (mass%) | | | | | | | | | | | | | | | |
| | Fused alumina | Particle size: greater than 1 mm to 3 mm | 55 | 55 | 55 | 50 | 50 | 50 | 50 | 50 | 50 | 50 | 50 | 50 | 50 |
| | Fused alumina | Particle size: 1 mm or less | 27 | 26 | 25 | 29 | 19 | 39 | 35 | 35 | 25 | 25 | 35 | 30 | 44 |
| | Calcined alumina | Average particle size: 5 *µ*m | 9 | 9 | 9 | 9 | 6 | 10 | | | 10 | 10 | | 10 | |
| | Calcined alumina | Average particle size: 20 *µ* m | | | | | | | | | | | 9 | | |
| | *γ* alumina | Average particle size: 5 *µ*m | | | | | | | 9 | | | | | | |
| | Aluminum hydroxide | Average particle size: 5 *µ* m | | | | | | | | 9 | | | | | |
| | Metal aluminum | Particle size: 0.074 mm or less | 6 | 6 | 6 | 6 | 25 | 1 | 6 | 6 | | | 6 | 10 | 6 |
| | Flake graphite | Particle size: 0.2 mm or less | | | | 6 | | | | | | | | | |
| | Aluminun nitride | Particle size: 0.1 mm or less | 3 | 4 | 5 | | | | | | | | | | |
| | AlON solid solution | Particle size: 74 *µ*m or less | | | | | | | | | 15 | | | | |
| | Al₂O₃ · AlN | Particle size: 74 *µ*m or less | | | | | | | | | | 15 | | | |
| | Aluminaceous raw material excluding calcined alumina | | 82 | 81 | | 79 | 69 | 89 | 85 | 85 | 75 | 75 | 85 | 80 | 94 |
| | Amount of mixture (A + B) (mass%)* | | 15 | 15 | 15 | 15 | 31 | 11 | 15 | 15 | | | | 20 | |
| | Mass ratio A/B * | | 1.5 | 1.5 | 1.5 | 1.5 | 0.25 | 10 | 1.5 | 1.5 | | | | 1 | |
| Mineral Composition of Brick (mass%) | | a) AlON solid solution | | | | | | 3 | | | 15 | | | | |
| | | b) Al₂O₃ · AlN | 15 | 15 | 15 | 15 | | 3 | 15 | 15 | | 15 | 3 | | |
| | | c) 2H *δ* / x = 6 | | | | 3 | 30 | | 5 | 5 | | | 2 | 10 | 3 |
| | | Total amount of aluminum oxynitride [a)+b)+c)] | 15 | 15 | 15 | 18 | 30 | 6 | 20 | 20 | 15 | 15 | 5 | 10 | 3 |
| | | Aluminum oxynitride in matrix portion | 15 | 15 | 15 | 18 | 30 | 6 | 20 | 20 | 15 | 15 | 5 | 10 | 3 |
| | | AlN polytypoid sialon | | | | | | | | | | | | | |
| | | Aluminum nitride | 2 | 3 | 4 | | 5 | | | | | | | 8 | 8 |
| | | Corundum | 80 | 79 | 78 | 73 | 62 | 87 | 77 | 77 | 85 | 85 | 92 | 79 | 80 |
| | | Flake graphite | | | | 6 | | | | | | | | | |
| Burning Atmosphere | | | Nitrogen | Nitrogen | Nitrogen | Nitrogen | Nitrogen | Nitrogen | Nitrogen | Nitrogen | Nitrogen | Nitrogen | Nitrogen | Si₃N₄ + coke | Si₃N₄ + coke |
| Physical Properties of Brick | | Apparent porosity (%) | 14 | 15 | 16 | 15 | 12 | 18 | 12 | 14 | 14 | 14 | 13 | 15 | 15 |
| | | Compressive strength (Mpa) | 120 | 120 | 110 | 150 | 250 | 80 | 180 | 180 | 180 | 180 | 150 | 150 | 120 |
| Corrosion Resistance (Corrosion Loss Index) | | Slag resistance | 90 | 90 | 110 | 50 | 100 | 120 | 80 | 80 | 70 | 65 | 110 | 100 | 120 |
| | | Molten pig iron resistance | 40 | 40 | 50 | 80 | 100 | 70 | 70 | 70 | 40 | 40 | 60 | 80 | 100 |
| Hydration Resistance (Hydration Index) | | | 80 | 90 | 100 | 40 | 120 | 50 | 80 | 80 | 40 | 40 | 40 | 150 | 150 |

| | | | | | | | | | | | | | | | |
|---|---|---|---|---|---|---|---|---|---|---|---|---|---|---|---|
| * A: Calcined alumina having an average particle size of 10 µm or less and/or an alumina precursor having an average particle size of 10 µm or less | | | | | | | | | | | | | | | |

As aluminum oxynitride, a brick in Inventive Example 1, a brick in Inventive Example 2 and a brick in Inventive Example 3 contain, respectively, AlON solid solution, Al₂O₃ · AlN and 2Hδ/x = 6, in the matrix portion in an amount of 15 mass%, so that these bricks are excellent in terms of the slag resistance, the molten pig iron resistance and the hydration resistance. Further, as aluminum oxynitride, a brick in Inventive Example 4 contains AlON solid solution and Al₂O₃ · AlN in the matrix portion in a total amount of 15 mass%, and a brick in Inventive Example 5 contains Al₂O₃ · AlN and 2Hδ/x = 6 in the matrix portion in a total amount of 15 mass%, so that these bricks are excellent in terms of the slag resistance, the molten pig iron resistance and the hydration resistance.

Further, a brick in Inventive Example 6 contains aluminum oxynitride in the matrix portion in an amount of 7 mass%, and a brick in Inventive Example 7 contains aluminum oxynitride in the matrix portion in an amount of 50 mass%, so that these bricks are excellent in terms of the slag resistance, the molten pig iron resistance and the hydration resistance.

On the other hand, in Comparative Example 1, the content of aluminum oxynitride is 4 mass% which is less than the lower limit of the range defined in the appended claims, so that the slag resistance is significantly deteriorated. Further, in Comparative Example 2, the content of aluminum oxynitride is 60 mass% which is greater than the upper limit of the range defined in the appended claims, so that the molten pig iron resistance is significantly deteriorated.

Although a brick in Inventive Example 8 is an example where AlN polytypoid sialon is contained in an amount of 3 mass%, it is also excellent in terms of the slag resistance, the molten pig iron resistance and the hydration resistance. On the other hand, a brick in Comparative Example 3 which is an example where AlN polytypoid sialon is contained in an amount of 4 mass% resulted in exhibiting poor hydration resistance.

Although bricks in Inventive Examples 9 and 10 contain aluminum nitride, respectively, in an amount of 2 mass% and in an amount of 3 mass%, they are also excellent in terms of the slag resistance, the molten pig iron resistance and the hydration resistance. On the other hand, a brick in Comparative Example 4 containing aluminum nitride in an amount of 4 mass% resulted in exhibiting poor hydration resistance. It should be noted here that Inventive Examples 9 and 10 and Comparative Example 4 were burned at at a lower temperature than that for the remaining Inventive Examples and Comparative Examples so as to leave unreacted aluminum nitride.

A brick in Inventive Example 11 contains flake graphite, and thereby exhibits good slag resistance.

In Comparative Example 5, the mass ratio A/B of (A) the calcined alumina having an average particle size of 10 µm or less and/or then alumina precursor having an average particle size of 10 µm or less to (B) the metal aluminum having a particle size of 0.1 mm or less is 0.25 which is less than the lower limit of the range defined in the appended claims, and aluminum nitride is contained in an amount of 5 mass%, so that the hydration resistance is deteriorated.

In Comparative Example 6, the mass ratio A/B is greater than the upper limit of of the range defined in the appended claims, so that the slag resistance is deteriorated.

Although a brick in Inventive Example 12 is an example where γ alumina having an average particle size of 5 µm is used as the alumina precursor, and a brick in Inventive Example 13 is an example where aluminum hydroxide having an average particle size of 5 µm is used as the alumina precursor, they exhibit the slag resistance, the molten pig iron resistance and the hydration resistance which are equal to or better than those in a case where calcined alumina having an average particle size of 5 µm. On the other hand, in Comparative Example 7 which is an example where calcined alumina having an average particle size of 20 µm is used, an amount of formation of aluminum oxynitride is as small as 5 mass%.

A brick in Inventive Example 14 which is an example where AlON solid solution is used as a raw material to serve as aluminum oxynitride results in exhibiting the slag resistance, the molten pig iron resistance and the hydration resistance which are equal to or better than those in Inventive

### Example 1.

A brick in Inventive Example 15 which is an example where Al₂O₃ · AlN is used as a raw material to serve as aluminum oxynitride results in exhibiting the slag resistance, the molten pig iron resistance and the hydration resistance which are equal to or better than those in Inventive Example 2.

A brick in Comparative Example 8 which was burnt in a container filled with silicon nitride particles and coke particles is deteriorated in terms of the hydration resistance due to excessive formation of aluminum nitride.

A brick in Comparative Example 9 which was burnt in a container filled with silicon nitride particles and coke particles without using the calcined alumina having an average particle size of 10 µm or less is deteriorated in terms of the hydration resistance due to further increase in the rate of formation of aluminum nitride with respect to an usage amount of the metal aluminum.

## Claims

1. A blast furnace hearth brick containing: corundum and aluminum oxynitride, respectively, in an amount of 47 to 92 mass% and in an amount of 7 to 50mass%, and in a total amount of 84 mass% or more; a carbonaceous raw material in an amount of 10 mass% or less (excluding 0); aluminum nitride in an amount of 3 mass% or less (including 0); and AlN polytypoid sialon, β'-sialon and silicon nitride in a total amount of 3 mass% or less (including 0), wherein the aluminum oxynitride is contained in a matrix portion of the blast furnace hearth brick, in an amount of 7 mass% or more.

2. A blast furnace hearth brick containing: corundum and aluminum oxynitride, respectively, in an amount of 47 to 92 mass% and in an amount of 7 to 50mass%, and in a total amount of 94 mass% or more; aluminum nitride in an amount of 3 mass% or less (including 0); and AlN polytypoid sialon, β'-sialon and silicon nitride in a total amount of 3 mass% or less (including 0), without containing any carbonaceous raw material, wherein the aluminum oxynitride is contained in a matrix portion of the blast furnace hearth brick, in an amount of 7 mass% or more.

3. A blast furnace hearth which is lined with the blast furnace hearth brick as claimed in claim 1 or 2.

4. A method of producing a blast furnace hearth brick, comprising:
preparing a refractory raw material composition which contains: in a total amount of 6 to 38 mass%, a mixture of (A) calcined alumina having an average particle size of 10 µm or less and/or an alumina precursor having an average particle size of 10 µm or less, and (B) metal aluminum having a particle size of 0.1 mm or less, which are mixed at a mass ratio (A/B) of 0.4 to 7.6; and an aluminaceous raw material excluding calcined alumina, in an amount of 62 to 94 mass%;
after adding a binder to the refractory raw material composition, subjecting the resulting mixture to kneading and shaping to obtain a shaped body; and
burning the shaped body in a nitrogen atmosphere at a temperature of 1300 to 1800°C.

5. A method of producing a blast furnace hearth brick, comprising:
preparing a refractory raw material composition which contains: an aluminaceous raw material excluding calcined alumina, in an amount of 50 to 87 mass%; calcined alumina having an average particle size of 10 µm or less, in an amount of 5 to 30 mass%; aluminum oxynitride having a particle size of 0.1 mm or less, in an amount of 7 to 50 mass%;
after adding a binder to the refractory raw material composition, subjecting the resulting mixture to kneading and shaping to obtain a shaped body; and
burning the shaped body in a nitrogen atmosphere at a temperature of 1300 to 1600°C.

6. The method as claimed in claim 4 or 5, wherein the refractory raw material composition contains flake graphite having a particle size of 0.2 mm or less, in an amount of 1 to 10 mass%.
